Europäisches Patentamt

European Patent Office

Office européen des brevets

(11) Veröffentlichungsnummer: **0 462 547 A2**

# (12) EUROPÄISCHE PATENTANMELDUNG

(21) Anmeldenummer: **91109918.2**

(22) Anmeldetag: **17.06.91**

(51) Int. Cl.5: **H02M 7/538**

(30) Priorität: **20.06.90 DE 4019665**

(43) Veröffentlichungstag der Anmeldung:
**27.12.91 Patentblatt 91/52**

(84) Benannte Vertragsstaaten:
**AT BE CH DE ES FR GB IT LI NL SE**

(71) Anmelder: **Siemens Nixdorf
Informationssysteme AG
Otto-Hahn-Ring 6
W-8000 München 83(DE)**

(72) Erfinder: **Busch, Peter, Dipl.-Ing. (FH)**

Flugfeldstrasse 16
W-8900 Augsburg(DE)
Erfinder: **Rettenmaier, Helmut, Dipl.-Ing. (TU)**
Buchenstrasse 16
W-8934 Grossaitingen(DE)
Erfinder: **Sterzik, Willi, Dipl.-Ing. (FH)**
Karlsbader Strasse 28
W-8900 Augsburg(DE)

(74) Vertreter: **Fuchs, Franz-Josef, Dr.-Ing. et al
Postfach 22 13 17
W-8000 München 22(DE)**

(54) **Verfahren und Schaltungsanordnung zur Erzeugung einer sinusförmigen Netzwechselspannung aus einer Gleichspannung.**

(57) Zur Erzeugung einer sinusförmigen Netzwechselspannung aus einer Gleichspannung wird die Gleichspannung in eine Rechteckspannung mit Spannungsimpulsen, deren Längen entsprechend der Änderung der zu erzeugenden sinusförmigen Netzwechselspannung gesteuert sind, umgeformt. Die Rechteckspannung wird über einen Hochfrequenztransformator (TR) übertragen. Anschließend werden die übertragenen Spannungsimpulse jeweils für eine vorgegebene Zeitdauer abgegriffen und ge- filtert. Die Sekundärseite des Hochfrequenztransformators (TR) wird jeweils während der durch die sinusförmige Steuerung der Spannungsimpulslängen bei gleichzeitiger Konstanz der Impulsfrequenz bedingten Impulspausen kurzgeschlossen. In diesen Phasen wird über den Hochfrequenztransformator (TR) Energie rückübertragen. Durch diese Eigenschaft kann die Schaltungsanordnung auch als Ladeschaltung verwendet werden.

FIG 1

Die Erfindung betrifft ein Verfahren zur Erzeugung einer sinusförmigen Netzwechselspannung aus einer Gleichspannung gemäß den Merkmalen des Oberbegriffs des Anspruchs 1 und eine Schaltungsanordnung zur Durchführung des Verfahrens gemäß den Merkmalen des Oberbegriffs des Anspruchs 4.

Mit der Verbreitung von Computern wird zunehmend auch der Ruf nach sicherem Betrieb auch bei Netzstörungen, z.B. Netzausfall oder Netzunterspannung, laut. Daher wächst der Bedarf an unterbrechungsfreien Stromversorgungen. Zur Zeit werden unterbrechungsfreie Stromversorgungen als im Computer integrierte Stromversorgungen oder als vorgeschaltete Zusatzgeräte hergestellt. Die vorgeschalteten Zusatzgeräte beinhalten einen Wechselrichter, der bei Netzfehlern eine Wechselspannung aus einer Gleichspannung erzeugt.

Ein solcher Wechselrichter ist beispielsweise aus US-Z.: IEEE TRANSACTIONS ON POWER ELECTRONICS, VOL. 3, NO.4, OCTOBER 1988, S. 406 bis 411 bekannt. Der Wechselrichter besteht im wesentlichen aus einem Übertrager mit zwei im Gegentakt geschalteten Primärschaltern und zwei im Gegentakt geschalteten Sekundärschaltern sowie einer Filterschaltung auf der Sekundärseite des Übertragers. Sowohl die Primärschalter als auch die Sekundärschalter schalten jeweils mit einer konstanten Tastrate von 50 Prozent. Die sinusförmige Ausgangsspannung wird dadurch erhalten, daß die Sekundärschalter gegenüber den Primärschaltern mit einer sinusförmig variierenden Phasenverschiebung schalten.

Aus der deutschen Offenlegungsschrift DE 39 12 941 ist ein Spannungsversorgungsgerät mit einem entsprechenden Wechselrichter bekannt. Der Wechselrichter besteht aus einem Rechteckwandler, einem Transformator, einem Stromrichter und einer Filtereinrichtung. Der Stromrichter und die Filtereinrichtung sind hier für die Erzeugung von drei Netzwechselspannungen ausgelegt. Die Bauteile für die Erzeugung einer Netzwechselspannung sind deshalb in diesen Komponenten je dreimal vorhanden. Die Arbeitsweisen der Bauteile für die Erzeugung einer Netzwechselspannung sind jedoch jeweils gleich. Ein Unterschied besteht lediglich in der jeweiligen zeitlichen Steuerung.

Zur Erzeugung der einzelnen Netzwechselspannung weist der Rechteckwandler im Gegentakt gesteuerte Schaltmittel auf. Die Schaltmittel setzen eine Gleichspannung in abwechselnd aufeinanderfolgende auf- und abwärtsgerichtete Spannungsimpulse um. Die Spannungsimpulse folgen unmittelbar aufeinander und dauern jeweils unverändert gleich lang. Die Spannungsimpulse werden über den Transformator geleitet. Nach dem Transformator werden die übertragenen Spannungsimpulse im Stromwandler jeweils über eine vorgegebene Zeitdauer abgegriffen. Die Zeitdauer der einzelnen Abgriffe ist für jeden übertragenen Spannungsimpuls unterschiedlich. Die zugrundeliegende Änderung der Abgriffszeitdauer entspricht der sinusförmigen Änderung der zu erzeugenden sinusförmigen Netzwechselspannung. Die bei dem Abgriff gewonnenen Spannungsimpulse werden dann durch die Filtereinrichtung zur zu erzeugenden sinusförmigen Netzwechselspannung umgeformt.

Ein Nachteil der vorbeschriebenen Wechselrichter ist, daß jeweils der Gleichspannungsquelle ständig Strom entnommen und sie damit ständig belastet wird, da während der Erzeugung der sinusförmigen Netzwechselspannung keine Rückladung von Energie in die Spannungsquelle vorgenommen wird.

Aufgabe der Erfindung ist es deshalb, ein Verfahren zur Erzeugung einer sinusförmigen Netzwechselspannung anzugeben, bei dem eine Rückladung von Energie während der Erzeugung der sinusförmigen Netzwechselspannung erfolgt. Ferner ist es Aufgabe der Erfindung, eine Schaltungsanordnung zur Durchführung des Verfahrens anzugeben.

Diese Aufgabe wird für das Verfahren, ausgehend von einem Verfahren der eingangs genannten Art, durch die Merkmale des kennzeichnenden Teils des Anspruchs 1 und für die Schaltungsanordnung, ausgehend von einer Schaltungsanordnung der eingangs genannten Art, durch die Merkmale des kennzeichnenden Teils des Anspruchs 4 gelöst. Bei dem erfindungsgemäßen Verfahren werden die Längen der aus einer Gleichspannung abwechselnd auf- und abwärtsgerichtet erzeugten Spannungsimpulse bereits vor der Übertragung über einen Hochfrequenztransformator entsprechend der sinusförmigen Änderung der zu erzeugenden sinusförmigen Netzwechselspannung gesteuert. Gleichzeitig wird während des Auftretens von Spannungsimpulspausen die Sekundärseite des Hochfrequenztransformators kurzgeschlossen. In diesen Phasen erfolgt eine Rückladung der in der Filtereinrichtung gespeicherten Energie in die Gleichspannungsquelle, die hierdurch entlastet wird. Die zu erzeugende Netzwechselspannung weist einen sinusförmigen Verlauf auf, auch wenn induktive und kapazitive Lasten zu versorgen sind.

Die Schaltungsanordnung zur Durchführung des erfindungsgemäßen Verfahrens weist einen Rechteckspannungsimpulsformer mit in der Weise im Gegentakt gesteuerte Schaltmittel auf, daß die Schaltdauer der einzelnen geschalteten Schaltmittel in aufeinanderfolgenden Schaltzyklen entsprechend der sinusförmigen Änderung der zu erzeugenden sinusförmigen Netzwechselspannung gesteuert ist. Gleichzeitig weist eine Spannungsimpulsabgriffsschaltung weitere Schaltmittel auf, die in Phasen, in denen im Rechteckspannungsimpulsformer kein Schaltmittel geschaltet ist, die Sekundärseite eines Hochfrequenztransformators kurzschließen, so daß eine Rückübertragung der in einer Filtereinrichtung gespeicherten Energie in die Gleichspannungsquelle möglich ist. Ein Vorteil dieser Schaltungsanordnung ist, daß die gleiche Schaltung auch als Ladeschaltung für eine Gleichspannungsquelle verwendet werden kann.

Vorteilhafte Ausgestaltungen der Erfindung sind Gegenstand von Unteransprüchen. Danach kann das Kurzschließen der Sekundärseite des Hochfrequenztransformators durch ein zusätzliches Schaltmittel innerhalb der Spannungsimpulsabgriffsschaltung erfolgen, wobei dann die Schaltmittel zum Abgriff der über den Hochfrequenztransformator übertragenen Spannungsimpulse einfacher zu steuern sind.

In einer anderen vorteilhaften Ausgestaltung der Erfindung bewerkstelligen die für den Abgriff der über den Hochfrequenztransformator übertragenen Spannungsimpulse zuständigen Schaltmittel das Kurzschließen der Sekundärseite des Hochfrequenztransformators. Ein zusätzliches Schaltmittel hierfür kann dann entfallen, so daß der Schaltungsaufwand geringer ist.

Nachfolgend wird die Erfindung anhand von Ausführungsbeispielen unter Bezugnahme auf die Zeichnung näher beschrieben. Dabei zeigen:

FIG 1   eine erste Prinzipschaltung einer Schaltungsanordnung gemäß der Erfindung,

FIG 2   ein Prinzipschaltdiagramm für die in der Prinzipschaltung nach FIG 1 enthaltenen Schaltmittel,

FIG 3   eine zweite Prinzipschaltung einer Schaltungsanordnung gemäß der Erfindung,

FIG 4   ein Prinzipschaltdiagramm für die in der Prinzipschaltung nach FIG 3 enthaltenen Schaltmittel und

FIG 5   eine Steuerschaltung in Prinzipdarstellung für die in den FIG 1 bis 4 zur Anwendung kommenden Schaltmittel.

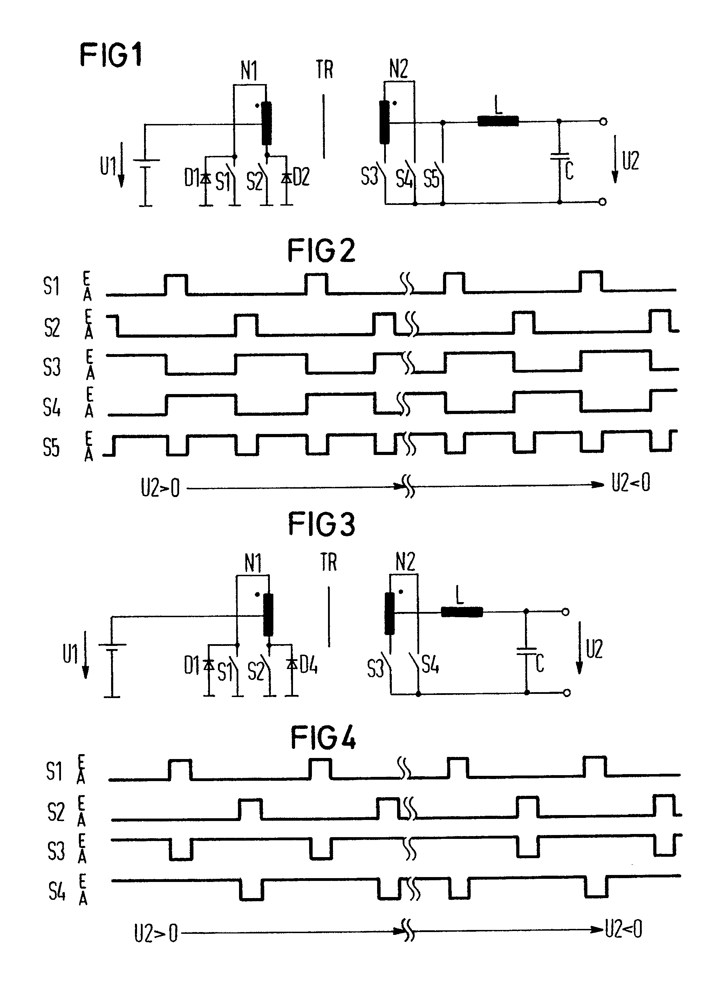

Die Schaltungsanordnung nach FIG 1 weist eine Gleichspannungsquelle U1 auf, die mit dem Pluspol an einen Mittelabgriff der Primärwicklung eines Hochfrequenztransformators TR angeschlossen ist. Der Minuspol der Gleichspannungsquelle U1 ist mit dem Massepotential der Schaltungsanordnung verbunden. Die beiden Enden der Primärwicklung des Hochfrequenztransformators TR sind jeweils über einen Schalter S (S1 bzw. S2), der durch eine in Sperrichtung gepolte Diode D (D1 bzw. D2) überbrückt ist, ebenfalls mit dem Massepotential der Schaltungsanordnung verbunden. Die Schalter S1 und S2 sowie die Dioden D1 und D2 können als Reckteckspannungsimpulsformer aufgefaßt werden.

Die Sekundärwicklung des Hochfrequenztransformators TR weist wie die Primärwicklung einen Mittelabgriff auf. An dem Mittelabgriff ist eine Drossel L angeschlossen, deren gegenüberliegende Seite den einen Pol der beiden Ausgangsanschlüsse der Schaltungsanordnung bildet. Zwischen diesem Pol und dem zweiten Pol der Ausgangsanschlüsse der Schaltungsanordnung ist ein Ausgangskondensator C angeordnet, der mit der Ausgangsspannung U2 aufgeladen wird. Die Ausgangsspannung U2 stellt die zu erzeugende sinusförmige Netzwechselspannung dar. Die beiden Enden sowie der Mittelabgriff der Sekundärwicklung des Hochfrequenztransformators TR sind jeweils über einen weiteren Schalter S (S3, S4, S5) mit dem zweiten Pol der Ausgangsanschlüsse der Schaltungsanordnung verbunden. Die weiteren Schalter S (S3, S4, S5) arbeiten als Spannungsimpulsabgriffsschaltung.

Zur Erzeugung einer sinusförmigen Netzwechselspannung in Form der Ausgangsspannung U2 werden die beiden Schalter S1 und S2 im Gegentakt angesteuert. Die Ansteuerung ist in FIG 2 in den Zeilen für S1 und S2 vom Prinzip her dargestellt. Die Randnote E sagt hier aus, daß der betreffende Schalter eingeschaltet ist. Analog dazu sagt die Randnote A hier aus, daß der betreffende Schalter ausgeschaltet ist. Das gleiche gilt für alle anderen Schalter in dieser Figur sowie für FIG 4.

Die Ansteuerung der Schalter S1 und S2 erfolgt derart, daß die Schalter in konstanten Zeitabständen geschaltet werden, wobei die jeweilige Schaltdauer unterschiedlich ist. Die Schaltdauer ändert sich entsprechend der sinusförmigen Änderung der zu erzeugenden sinusförmigen Netzwechselspannung. Der konstante Zeitabstand zwischen dem Schalten der jeweiligen Schalter ist so gewählt, daß bei maximaler Einschaltdauer zwischenzeitlich keine Schaltpausen entstehen. Bei einer kürzeren Einschaltdauer dagegen existieren Phasen, in denen weder der eine noch der andere Schalter geschaltet ist.

Der angesprochene Sachverhalt ist in der FIG 2 zu erkennen, wobei zwischen zwei Bereichen U2 > 0 und U2 < 0 für die Ausgangsspannung U2 unterschieden wird. In jedem Bereich sind einige Schaltzyklen dargestellt, die quasi eine Momentaufnahme des Schaltspiels der Schalter darstellen. Bei dem in FIG 2 dargestellten Schaltdiagramm handelt es sich deshalb nur um eine prinzipielle Darstellung.

Die beiden in der FIG 1 angesprochenen Schalter S1 und S2 formen die Gleichspannung der Gleichspannungsquelle U1 in eine Rechteckspannung mit Spannungsimpulsen, deren Längen entsprechend der sinusförmigen Änderung der zu erzeugenden sinusförmigen Netzwechselspannung gesteuert sind, um. Die Rechteckspannung wird über den Hochfrequenztransformator TR übertragen. Auf der Sekundärseite des Hochfrequenztransformators TR werden die übertragenen Spannungsimpulse jeweils für eine vorgegebene Zeitdauer abgegriffen. Der Abgriff wird durch die Schalter S3 und S4 bewerkstelligt. Dabei schalten die Schalter S3 und S4 abwechselnd mit einem Tastverhältnis von jeweils 50 Prozent. Durch das konstante Tastverhältnis ist der Steuerungsaufwand hierfür gering. Wie in FIG 2 für den Spannungsbereich U2 > 0 der Ausgangsspannung U2 dargestellt ist, schaltet der Schalter S3 jeweils gleichzeitig zusammen mit dem Schalter S2 während der Schalter S4 jeweils zusammen mit dem Schalter S1 schaltet.

Der Schalter S5 ist während der Phasen, in denen einer der Schalter S1 oder S2 geschaltet ist, geöffnet. Während dieser Phasen wird Engergie von der Primärseite des Hochfrequenztransformators TR zur Sekundärseite übertragen. Der Strom durch die Drossel L steigt linear an und lädt den Ausgangskondensator C. Sind die Schalter S1 und S2 abgeschaltet, wird der Schalter S5 geschlossen. Er schließt die Sekundärseite des Hochfrequenztransformators TR kurz. Der geschlossene Schalter S5 wirkt jetzt als Freilaufdiode. Der Strom durch die Drossel L nimmt wieder linear ab.

Die Höhe der Ausgangsspannung U2 wird über das Tastverhältnis eingestellt, das die Schalter S1 und S2 im jeweiligen Augenblick aufweisen. Die Ausgangsspannung U2 berechnet sich nach der Formel:

$$U2 = 2 \cdot v_T/ü \cdot U1$$

Dabei gilt:

ü =   N1/N2 (Verhältnis der Windungszahlen N1 und N2 der Primär- und der Sekundärwicklung des Hochfrequenztransformators TR)

$v_T$   (Tastverhältnis des Schalters S1 bzw. S2)

Angemerkt sei, daß die oben angegebene Gleichung gilt, wenn der Strom durch die Drossel L kontinuierlich fließt bzw. sich nicht umkehrt. Polt sich der Strom während der Phase, in der der Schalter S5 geschlossen ist, in der Drossel L um, wird Energie von der Sekundärseite des Hochfrequenztransformators TR zur Primärseite übertragen. Wird der Schalter S5 geöffnet, steigt die Spannung über S5 an. Diese Spannung wird über die geschlossenen Schalter S1 bzw. S2 und S3 bzw. S4 auf die Primärseite des Hochfrequenztransformators TR übertragen. Stellt U2 eine Spannungsquelle dar, kann dadurch Energie in die Gleichspannungsquelle U1 eingespeist werden. Falls U2 nicht genügend Energie liefert, sinkt U2 in der Spannung ab.

Die Spannung, die sich bei dieser Betriebsart an der Gleichspannungsquelle U1 einstellen würde, berechnet sich nach der Formel:

$$U1 = U2 \cdot ü/(2 \cdot v_T)$$

Dabei gilt:

$v_T$     Tastverhältnis der Schalter S1 oder S2
Das Tastverhältnis des Schalters S5 berechnet sich zu

$$v_T (S5) = 1 - 2 \cdot v_T$$

Die angegebene Gleichung für die sich an der Gleichspannungsquelle U1 einstellenden Spannungen gilt für die Betriebsart, bei der der Strom durch die Drossel L negativ bleibt. Wird die hier zugrundeliegende Stromrichtung bewußt herbeigeführt, arbeitet die Schaltungsanordnung als Ladeschaltung.

In FIG 2 ist ein Spannungsbereich U2 < 0 dargestellt. Dieser Spannungsbereich korrespondiert mit der jeweils zweiten Halbwelle der sinusförmigen Netzwechselspannung bzw. Ausgangsspannung U2. Eine Ausgangsspannung mit negativer Polarität wird einfach dadurch erzeugt, daß die Schalter S3 und S4 der Spannungsimpulsabgriffsschaltung gegenphasig zu den Schaltern S1 und S2 des Rechteckspannungsimpulsformers angesteuert werden. Das heißt, daß in diesem Bereich die Schalter S1 und S3 sowie die Schalter S2 und S4 jeweils gleichzeitig geschaltet werden. Der Energiefluß ist auch in dieser Betriebsart sowohl in Richtung von der Primär- zur Sekundärseite als auch von der Sekundär- zur Primärseite des Hochfrequenztransformators TR gewährleistet.

Durch eine andere Steuerung der Schalter S3 und S4 der Spannungsimpulsabgriffsschaltung kann auf den Schalter S5 verzichtet werden (FIG 3). Die Schalter S3 und S4 müssen dazu nur gleichzeitig geschlossen werden, wenn beabsichtigt wird, den Schalter S5 aus FIG 1 zu schließen.

FIG 4 zeigt die Ansteuerung der einzelnen Schalter S1 bis S4 für beide Spannungsbereiche U2 > 0 und U2 < 0 der Ausgangsspannung U2. Für den Spannungsbereich U2 < 0 gelten für die Spannungen und Ströme in Analogie zu dem vorher Gesagten die gleichen Überlegungen wie für den Spannungsbereich U2 > 0, jedoch mit umgekehrtem Vorzeichen.

Eine sinusförmige Ausgangsspannung U2 entsteht dann, wenn die Ausgangsspannung U2 gemäß dem Ausdruck

$$| u2 \cdot sin \, wt |$$

geregelt und die Spannung in ihrer Polarität entsprechend den Sinushalbwellen umgeschaltet wird.

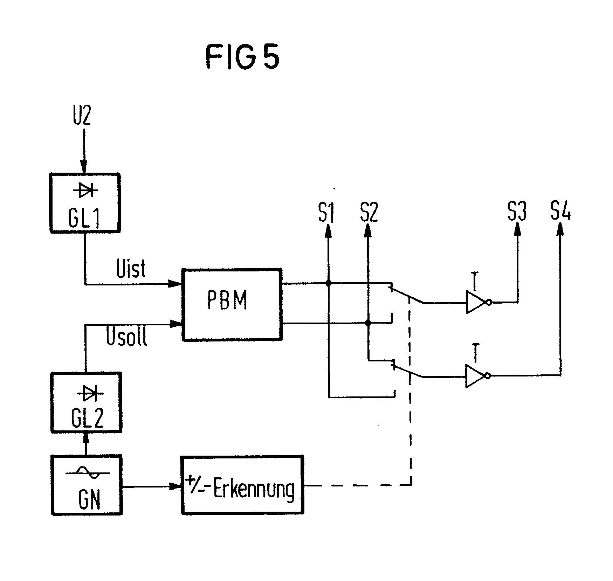

FIG 5 zeigt in Prinzipdarstellung eine mögliche Realisierung einer Steuerschaltung zum Steuern der in den FIG 1 bis FIG 4 eingesetzten Schalter S1 bis S4. Die Ansteuerung der Schalter S3 und S4 sowie die Spannungsrückführung der Ausgangsspannung U2 erfolgen potentialgetrennt. Eine Ausgangsstromüberwachung kann Bestandteil der Steuerschaltung sein.

Die Steuerschaltung weist einen Sinusgenerator GN auf, der ein Sinussignal mit einer vorgegebenen Frequenz liefert. Das vom Sinusgenerator erzeugte Sinussignal wird zum einen an einen Vollweggleichrichter GL2 und zum anderen an eine Schaltung zur +/--Erkennung, d.h. zur Erkennung der positiven und negativen Halbwelle des Sinussignals, weitergeleitet. Der Vollweggleichrichter GL2 führt eine Betragsbildung des vom Sinusgenerator GN gelieferten Sinussignals durch während die Schaltung für die +/--Erkennung in Abhängigkeit vom Auftreten einer positiven oder negativen Halbwelle des ankommenden Sinussignals Steuersignale zum Umschalten zweier Umschalter erzeugt. Das Ausgangssignal des Vollweggleichrichters GL2 wird einem Pulsbreitenmodulationsregler PBM als Soll-Signal Usoll zugeführt. Neben dem Soll-Signal Usoll wird dem Pulsbreitenmodulationsregler PBM ein Ist-Signal Uist zugeführt, das das Ausgangssignal eines anderen Vollweggleichrichters GL1 und damit ebenfalls ein Betragsignal ist. Die Verarbeitungsgröße dieses Vollweggleichrichters GL1 zur Bildung des Ist-Signals Uist ist die Ausgangsspannung U2 der in FIG 1 bis FIG 4 beschriebenen Schaltungsanordnung.

Der Pulsbreitenmodulationsregler PBM bildet aus der Differenz zwischen dem Soll-Signal Usoll und dem Ist-Signal Uist je Halbwelle ein pulsbreitenmoduliertes Ausgangssignal. Je Halbwelle wird das pulsbreitenmodulierte Ausgangssignal über einen von zwei Ausgängen ausgegeben. Mit dem Ausgangssignal des einen Ausgangs wird der Schalter S1 und mit dem Ausgangssignal des anderen Ausgangs wird der Schalter S2 der in den FIG 1 bis FIG 4 beschriebenen Schaltungsanordnung gesteuert.

Die Ausgangssignale der beiden Ausgänge des Pulsbreitenmodulationsreglers PBM werden jeweils parallel an die an die zwei oben erwähnten Umschalter geführt, die jeweils zwischen einem der Ausgangssignale auswählen. Die jeweils ausgewählten Signale werden zur Steuerung der Schalter S3 und S4 verwendet. Dabei steuert das eine Ausgangssignal den Schalter S3 und das andere Ausgangssignal den Schalter S4. Zur Steuerung der Schalter sind die Ausgangssignale vorher über Treiberschaltungen T geführt. Die Auswahl der jeweiligen Ausgangssignale des Pulsbreitenmodulationsreglers PBM durch die Umschalter bzw. die Zuordnung eines der Ausgangssignale zu dem jeweils betreffenden Schalter S3 bzw. S4 erfolgt durch die Steuersignale der Schaltung für die +/--Erkennung gemäß den Ausführungen, die im Zusammenhang mit den FIG 1 bis FIG 4 über die Schalter S1 bis S4 gemacht wurden.

Bei dem Pulsbreitenmodulationsregler PBM kann es sich beispielsweise um den IC-Baustein SG 35 26 von Silicon General handeln.

**Patentansprüche**

1. Verfahren zur Erzeugung einer sinusförmigen Netzwechselspannung aus einer Gleichspannung, die zur Übertragung über einen Hochfrequenztransformator mit jeweils einem maximalen Tastverhältnis von 50 Prozent und einer konstanten Impulsfrequenz in abwechselnd aufeinanderfolgende auf- und abwärtsgerichtete rechteckförmige Spannungsimpulse umgeformt wird, die nach der Übertragung jeweils mit einem vorgegebenen festen Tastverhältnis abgegriffen und dann gefiltert werden, **dadurch gekennzeichnet,** daß in einem ersten Fall das Tastverhältnis der auf- bzw. abwärtsgerichteten Spannungsimpulse jeweils für sich bzw. in einem zweiten Fall das Tastverhältnis der auf- bzw. abwärtsgerichteten Spannungsimpulse zusammengenommen entsprechend der sinusförmigen Änderung der zu erzeugenden sinusförmigen Netzwechselspannung im Bereich zwischen 0 und 50 Prozent variiert wird, daß im ersten Fall jeweils solche Spannungsimpulse der auf- bzw. abwärtsgerichteten Spannungsimpulse aufeinanderfolgen, die das gleiche Tastverhältnis aufweisen und daß in beiden Fällen während der durch die Variation des Tastverhältnisses bei gleichzeitiger Konstanz der Impulsfrequenz bedingten Spannungsimpulspausen zwischen den abwechselnd aufeinanderfolgenden auf- bzw. abwärtsgerichteten Spannungsimpulsen die Sekundärseite des Hochfrequenztransformators (TR) kurzgeschlossen wird.

2. Verfahren nach Anspruch 1, **dadurch gekennzeichnet,** daß die über den Hochfrequenztransformator (TR) übertragenen Spannungsimpulse jeweils mit einem konstanten Tastverhältnis von 50 Prozent abgegriffen werden.

3. Verfahren nach Anspruch 1, **dadurch gekennzeichnet,** daß der Abgriff der über den Hochfrequenztransformator (TR) übertragenen Spannungsimpulse derart erfolgt, daß das Kurzschließen der Sekundärseite des Hochfrequenztransformators (TR) während der Phasen der Impulspausen durch die für den Abgriff der übertragenen Spannungsimpulse vorgesehenen Schaltmittel (S3, S4) erfolgt.

4. Schaltungsanordnung zur Durchführung des Verfahrens nach Anspruch 1, bestehend aus einem eingangsseitig angeordneten Rechteckspannungsimpulsformer mit im Gegentakt gesteuerten Schaltmitteln, einem nachfolgenden Hochfrequenztransformator, einer dem Hochfrequenztransformator nachgeschalteten Spannungsimpulsabgriffsschaltung mit mit jeweils vorgegebenem festen Tastverhältnis gesteuerten weiteren Schaltmitteln und einer ausgangsseitig angeordneten Filtereinrichtung, **dadurch gekennzeichnet,** daß der Rechteckspannungsimpulsformer derart gesteuerte Schaltmittel (S1, S2) aufweist, daß in einem ersten Fall die Schaltmittel jeweils für sich bzw. in einem zweiten Fall die Schaltmittel zusammen mit einem Tastverhältnis schalten, das entsprechend der sinusförmigen Änderung der zu erzeugenden sinusförmigen Netzwechselspannung variiert und daß die Spannungsimpulsabgriffsschaltung derart gesteuerte weitere Schaltmittel (z.B. S3, S4) aufweist, daß die Schaltmittel (z.B. S3, S4) in Phasen, in denen die Schaltmittel (S1, S2) des Rechteckspannungsimpulsformers nicht geschaltet sind, die Sekundärseite des Hochfrequenztransformators (TR) kurzschließen.

5. Schaltungsanordnung nach Anspruch 4, **dadurch gekennzeichnet,** daß die Spannungsimpulsabgriffsschaltung ein zusätzliches Schaltmittel (S5) aufweist, das derart gesteuert ist, daß das Kurzschließen der Sekundärseite des Hochfrequenztransformators (TR) während der Phasen, in denen die Schaltmittel (S1, S2) des Rechteckspannungsimpulsformers nicht geschaltet sind, durch das zusätzliche Schaltmittel (S5) erfolgt.

# FIG1

N1    TR    N2

U1    D1    S1    S2    D2    S3    S4    S5    L    C    U2

# FIG2

S1  E A

S2  E A

S3  E A

S4  E A

S5  E A

U2>0 ────────────────────────► U2<0

# FIG3

N1    TR    N2

U1    D1    S1    S2    D4    S3    S4    L    C    U2

# FIG4

S1  E A

S2  E A

S3  E A

S4  E A

U2>0 ────────────────────────► U2<0

# FIG 5